# EUROPEAN PATENT APPLICATION

(11) **EP 4 708 095 A1**
(43) Date of publication of application: **11.03.2026**
(21) Application number: 24822220.0
(22) Date of filing: 29.01.2024
(51) Int. Cl.: G06F 21/56, G06F 21/55

(54) **RANSOMWARE ATTACK DETECTION METHOD AND RELATED DEVICE**

(30) Priority: 13.06.2023 CN 202310697994; 03.08.2023 CN 202310976546
(71) Applicant: Huawei Technologies Co., Ltd., Shenzhen, Guangdong 518129 (CN)
(72) Inventor: CHU, Letian, Shenzhen, Guangdong 518129 (CN); HUANG, Mengyu, Shenzhen, Guangdong 518129 (CN); ZHOU, Qizhang, Shenzhen, Guangdong 518129 (CN); HU, Gang, Shenzhen, Guangdong 518129 (CN)
(74) Representative: Grünecker Patent- und Rechtsanwälte PartG mbB
(86) International application number: PCT/CN2024/074402
(87) International publication number: WO 2024/255259

(57) **Abstract**

A ransomware attack detection method and a related device are provided. The method includes: determining a target fingerprint based on a target input/output I/O sequence (S310); determining a similarity between an attack fingerprint in an attack fingerprint library and the target fingerprint based on the attack fingerprint library and the target fingerprint (S320); and determining, based on the similarity between the target fingerprint and the attack fingerprint, that the target I/O sequence is a normal I/O sequence or a ransomware attack I/O sequence (S330). A target fingerprint corresponding to an I/O sequence is determined in real time, and is compared with an attack fingerprint in an attack fingerprint library, so that whether the I/O sequence is normal can be determined quickly, and content of data corresponding to the I/O sequence does not need to be calculated and detected, thereby improving a ransomware attack detection speed.

## Description

This application claims priorities to Chinese Patent Application No. 202310697994.6, filed with the China National Intellectual Property Administration on June 13, 2023, and entitled "RANSOMWARE VIRUS HANDLING METHOD", and to Chinese Patent Application No. 202310976546.X, filed with the China National Intellectual Property Administration on August 3, 2023, and entitled "RANSOMWARE ATTACK DETECTION METHOD AND RELATED DEVICE", both of which are incorporated herein by reference in their entireties.

### TECHNICAL FIELD

This application relates to the computer field, and more specifically, to a ransomware attack detection method, a computing apparatus, a computing device, a chip system, and a computer-readable storage medium.

### BACKGROUND

The explosive growth of the data amount brings data storage problems. Storage device vendors and storage users have to face data security problems, such as ransomware attacks, brought by the explosive growth of the data scale. An attacker in a ransomware attack may access a storage device of a user and performs operations such as encryption, modification, or deletion on data stored in the storage device. As a result, the user cannot normally access or read/write the data stored in the storage device, and needs to use a decryption key provided by the attacker to recover or access the data. Currently, a ransomware attack detection method generally requires that, data corresponding to an input/output (input/output, I/O) sequence is determined based on the I/O sequence, and then content of the data is calculated and detected, to determine whether a ransomware attack occurs. In the method, it takes long time to detect the ransomware attack, and an alarm cannot be generated in a timely manner.

Therefore, how to improve a ransomware attack detection speed becomes an urgent problem to be resolved.

### SUMMARY

This application provides a ransomware attack detection method, a computing apparatus, a computing device, a chip system, and a computer-readable storage medium, to improve a ransomware attack detection speed.

According to a first aspect, a ransomware attack detection method is provided. The method includes: determining a target fingerprint based on a target input/output I/O sequence, where the target I/O sequence is used to access target data; determining a similarity between an attack fingerprint in an attack fingerprint library and the target fingerprint based on the attack fingerprint library and the target fingerprint, where the attack fingerprint library includes at least one attack fingerprint, and the attack fingerprint is determined based on an attack I/O sequence in a historical ransomware attack; and determining, based on the similarity between the target fingerprint and the attack fingerprint, that the target I/O sequence is a normal I/O sequence or a ransomware attack I/O sequence.

In this embodiment of this application, the target fingerprint corresponding to the I/O sequence may be determined in real time, and the target fingerprint is compared with the attack fingerprint in the attack fingerprint library, so that whether the I/O sequence is a ransomware attack I/O sequence can be determined. A data amount of the target data is generally large. In the method in this embodiment of this application, content of the target data does not need to be calculated and detected. Instead, the target fingerprint is determined based on an I/O sequence with a small data amount, and whether the I/O sequence is normal is determined by comparing the target fingerprint with the attack fingerprint in the attack fingerprint library. Therefore, whether the I/O sequence is a ransomware attack I/O sequence can be quickly determined, so that a ransomware attack detection speed can be improved.

With reference to the first aspect, in some implementations of the first aspect, the target fingerprint is determined based on a feature of the target I/O sequence, where the feature of the target I/O sequence includes an instruction included in the target I/O sequence and/or a storage address corresponding to the target I/O sequence, the target I/O sequence includes at least one instruction, and the at least one instruction is used to access the target data.

In this embodiment of this application, considering that an instruction included in a ransomware attack I/O sequence and/or a storage address corresponding to the ransomware attack I/O sequence have/has some special characteristics in comparison with a normal I/O sequence, a computing device may determine the target fingerprint based on the instruction included in the target I/O sequence and/or the storage address corresponding to the target I/O sequence, thereby facilitating comparison between the target fingerprint and the attack fingerprint in the attack fingerprint library, and further implementing ransomware attack detection.

With reference to the first aspect, in some implementations of the first aspect, the target fingerprint is determined based on the feature of the target I/O sequence and a feature of the target data. When the target data belongs to a file system, the feature of the target data includes at least one of the following: metadata of the target data, metadata of the file system, and content of the target data. When the target data is a data block or a part of data in the data block, the feature of the target data includes metadata of the target data and/or content of the target data.

In this embodiment of this application, considering that a feature of a ransomware attack I/O sequence has a special characteristic compared with a feature of a normal I/O sequence, and a feature of data corresponding to the ransomware attack I/O sequence also has a special characteristic compared with a feature of data corresponding to the normal I/O sequence, the computing device may determine the target fingerprint based on the feature of the target I/O sequence and the feature of the target data, thereby facilitating comparison between the target fingerprint and the attack fingerprint in the attack fingerprint library, and further implementing ransomware attack detection.

With reference to the first aspect, in some implementations of the first aspect, the metadata of the file system includes at least one of the following: identification information of the target data in the file system and identification information of a directory in which the target data is located in the file system.

In this embodiment of this application, when the target data belongs to the file system, considering that a ransomware attack I/O sequence may be specific to specific data in the file system or specific data in a specific directory, the target fingerprint may be determined based on the feature of the target I/O sequence and the metadata of the file system, so as to compare the target fingerprint with the attack fingerprint, thereby implementing ransomware attack detection.

With reference to the first aspect, in some implementations of the first aspect, an entropy value of the content of the target data is determined based on the content of the target data; and the target fingerprint is determined based on the feature of the target I/O sequence and the entropy value of the content of the target data.

In this embodiment of this application, considering that a ransomware attack encrypts content of data, and an entropy value of content of encrypted data is higher than an entropy value of the content of the original data, the entropy value of the content of the data may be calculated, and the target fingerprint may be determined based on the entropy value and the feature of the target I/O sequence, thereby facilitating comparison with the attack fingerprint, and implementing ransomware attack detection.

With reference to the first aspect, in some implementations of the first aspect, at least one feature of the target I/O sequence is encoded, to determine the target fingerprint.

In this embodiment of this application, the computing device may encode the at least one feature of the target I/O sequence, so that each feature is converted into a target fingerprint that is easy to measure or compare, thereby improving a speed of comparison with the attack fingerprint, and further improving a ransomware attack detection speed.

With reference to the first aspect, in some implementations of the first aspect, a first vector is determined based on the at least one feature of the target I/O sequence; and the target fingerprint is determined based on the first vector.

In this embodiment of this application, the computing device may convert the feature of the target I/O sequence into the first vector, and determine the target fingerprint based on the first vector, to implement a process of encoding the feature of the target I/O sequence. The target fingerprint may be the first vector or a character string determined based on the first vector, so that time required for comparison between the target fingerprint and the attack fingerprint is short.

With reference to the first aspect, in some implementations of the first aspect, the at least one feature of the target I/O sequence and at least one feature of the target data are encoded, to determine the target fingerprint.

In this embodiment of this application, the computing device may encode the at least one feature of the target I/O sequence and the at least one feature of the target data, so that each feature is converted into a target fingerprint that is easy to measure or compare, thereby improving a speed of comparison with the attack fingerprint, and further improving a ransomware attack detection speed.

With reference to the first aspect, in some implementations of the first aspect, a second vector is determined based on the at least one feature of the target I/O sequence and the at least one feature of the target data; and the target fingerprint is determined based on the second vector.

In this embodiment of this application, the computing device may convert the feature of the target I/O sequence and the feature of the target data into the second vector, and determine the target fingerprint based on the second vector, to implement a process of encoding the feature of the target I/O sequence and the target data. The target fingerprint may be the second vector or a character string determined based on the second vector, so that time required for comparison between the target fingerprint and the attack fingerprint is short.

With reference to the first aspect, in some implementations of the first aspect, if a similarity between the target fingerprint and a first attack fingerprint is greater than or equal to a first preset threshold, that the target I/O sequence is the ransomware attack I/O sequence is determined, where the first attack fingerprint is one of the at least one attack fingerprint; and if a similarity between the target fingerprint and each attack fingerprint in the attack fingerprint library is less than the first preset threshold, that the target I/O sequence is the normal I/O sequence is determined.

In this embodiment of this application, the computing device may quickly determine, by comparing the similarity between the target fingerprint and the attack fingerprint with the first preset threshold, whether the target I/O sequence is normal, so that a ransomware attack detection speed can be improved.

With reference to the first aspect, in some implementations of the first aspect, the attack fingerprint library further includes a storage address corresponding to each attack fingerprint.

In this embodiment of this application, the computing device may further store, in the attack fingerprint library, the storage address corresponding to each attack fingerprint, so that only content of data at the storage address can be recovered based on backup data corresponding to the storage address, and an entire data block, an entire file system, or an entire file does not need to be recovered, thereby accelerating a recovery speed and improving recovery efficiency.

With reference to the first aspect, in some implementations of the first aspect, the attack fingerprint library performs storage in a form of a key-value pair. A key in the key-value pair corresponds to the attack fingerprint, and a value in the key-value pair corresponds to the storage address corresponding to the attack fingerprint.

In this embodiment of this application, the attack fingerprint library may store the attack fingerprint and the storage address corresponding to the attack fingerprint in the form of the key-value pair, so that the attack fingerprint and the storage address corresponding to the attack fingerprint can be quickly queried for.

With reference to the first aspect, in some implementations of the first aspect, when that the target I/O sequence is the ransomware attack I/O sequence is determined, the target fingerprint is added to the attack fingerprint library.

In this embodiment of this application, when determining that the target I/O sequence is the ransomware attack I/O sequence, the computing device may add the target fingerprint corresponding to the target I/O sequence to the attack fingerprint library, to expand the attack fingerprint library, so that the attack fingerprint library can include more attack fingerprints.

With reference to the first aspect, in some implementations of the first aspect, before the target fingerprint is added to the attack fingerprint library, the method further includes: determining that a similarity between the target fingerprint and a second attack fingerprint is less than a second preset threshold. The second attack fingerprint is an attack fingerprint that is in the at least one attack fingerprint and that has a highest similarity to the target fingerprint, and the second preset threshold is greater than the first preset threshold.

In this embodiment of this application, the second preset threshold may be set, so that the attack fingerprint library can avoid storing a plurality of attack fingerprints with a high similarity, thereby further shortening ransomware attack detection time.

With reference to the first aspect, in some implementations of the first aspect, when the target fingerprint is added to the attack fingerprint library, a storage address corresponding to the target fingerprint is added to the attack fingerprint library.

With reference to the first aspect, in some implementations of the first aspect, a first attack I/O sequence is determined based on a first ransomware attack sample in a ransomware attack sample library, where the first ransomware attack sample is a ransomware attack sample in the ransomware attack sample library; and a first attack fingerprint is determined based on the first attack I/O sequence, where the first attack fingerprint is one of the at least one attack fingerprint.

In this embodiment of this application, the ransomware attack sample in the ransomware attack sample library may be used to perform a simulated attack, to determine at least one attack I/O sequence in an attack process of each ransomware attack sample, and determine an attack fingerprint based on the attack I/O sequence, so that an attack fingerprint library used for comparison with the target fingerprint can be constructed.

With reference to the first aspect, in some implementations of the first aspect, the attack fingerprint is determined based on the feature of the attack I/O sequence. The feature of the attack I/O sequence includes an instruction included in the attack I/O sequence and/or a storage address corresponding to the attack I/O sequence. The attack I/O sequence includes at least one instruction, and the at least one instruction in the attack I/O sequence is used to access attacked data.

In this embodiment of this application, considering that an instruction included in a ransomware attack I/O sequence and/or a storage address corresponding to the ransomware attack I/O sequence have/has some special characteristics in comparison with a normal I/O sequence, the computing device may determine the attack fingerprint based on the instruction included in the attack I/O sequence and/or the storage address corresponding to the attack I/O sequence, thereby facilitating comparison between the target fingerprint and the attack fingerprint, and further implementing ransomware attack detection.

With reference to the first aspect, in some implementations of the first aspect, the attack fingerprint is determined based on the feature of the attack I/O sequence and a feature of the attacked data. When the attacked data belongs to an attacked file system, the feature of the attacked data includes at least one of the following: metadata of the attacked data, metadata of the attacked file system, and content of the attacked data. When the attacked data is an attacked data block or a part of data in the attacked data block, the feature of the attacked data includes metadata of the attacked data and/or content of the attacked data.

In this embodiment of this application, considering that a feature of a ransomware attack I/O sequence has a special characteristic compared with a feature of a normal I/O sequence, and a feature of data corresponding to the ransomware attack I/O sequence also has a special characteristic compared with a feature of data corresponding to the normal I/O sequence, the computing device may determine the attack fingerprint based on the feature of the attack I/O sequence and the feature of the attacked data, thereby facilitating comparison between the target fingerprint and the attack fingerprint, and further implementing ransomware attack detection.

With reference to the first aspect, in some implementations of the first aspect, the metadata of the attacked file system includes at least one of the following: identification information of the attacked data in the attacked file system and identification information of a directory in which the attacked data is located in the attacked file system.

In this embodiment of this application, when the attacked data belongs to the attacked file system, considering that a ransomware attack I/O sequence may be specific to specific data in the attacked file system or specific data in a specific directory, the attack fingerprint may be determined based on the feature of the attack I/O sequence and the metadata of the attacked file system, so as to compare the target fingerprint with the attack fingerprint, thereby implementing ransomware attack detection.

With reference to the first aspect, in some implementations of the first aspect, an entropy value of the content of the attacked data is determined based on the content of the attacked data; and the attack fingerprint is determined based on the feature of the attack I/O sequence and the entropy value of the content of the attacked data.

In this embodiment of this application, considering that a ransomware attack encrypts content of data, and an entropy value of content of encrypted data is higher than an entropy value of the content of the original data, the entropy value of the content of the data may be calculated, and the attack fingerprint may be determined based on the entropy value and the feature of the attack I/O sequence, thereby facilitating comparison with the target fingerprint, and implementing ransomware attack detection.

With reference to the first aspect, in some implementations of the first aspect, at least one feature of the attack I/O sequence is encoded, to determine the attack fingerprint; or at least one feature of the attack I/O sequence and at least one feature of the attacked data are encoded, to determine the attack fingerprint.

In this embodiment of this application, the computing device may encode the feature of the attack I/O sequence, or may encode the feature of the attack I/O sequence and the feature of the attacked data, so that each feature is converted into an attack fingerprint that is easy to measure or compare, thereby improving a speed of comparison with the target fingerprint, and further improving a ransomware attack detection speed.

With reference to the first aspect, in some implementations of the first aspect, a third vector is determined based on the at least one feature of the attack I/O sequence, where the third vector is used to determine the attack fingerprint; or a fourth vector is determined based on the at least one feature of the attack I/O sequence and the at least one feature of the attacked data, where the fourth vector is used to determine the attack fingerprint.

In this embodiment of this application, the computing device may encode the feature of the attack I/O sequence, or the feature of the attack I/O sequence and the feature of the attacked data, so that each feature is converted into a vector or data that is easy to measure or compare, to determine the attack fingerprint, thereby facilitating comparison between the target fingerprint and the attack fingerprint, and improving a ransomware attack detection speed.

With reference to the first aspect, in some implementations of the first aspect, the target fingerprint and/or the attack fingerprint are/is a character string of a preset length.

In this embodiment of this application, the computing device may compare the target fingerprint with the attack fingerprint by comparing two character strings of the preset length, to determine whether the target I/O sequence is normal, thereby improving a ransomware attack detection speed.

According to a second aspect, an embodiment of this application provides a ransomware attack detection method. The method includes: determining a first attack I/O sequence based on a first ransomware attack sample in a ransomware attack sample library, where the first ransomware attack sample is a ransomware attack sample in the ransomware attack sample library; and determining a first attack fingerprint based on the first attack I/O sequence, where the first attack fingerprint is used to detect a ransomware attack.

In this embodiment of this application, an attack fingerprint corresponding to each attack I/O sequence may be determined by using an attack I/O sequence in an attack process of the ransomware attack sample. The attack fingerprint may be used to be compared with a target fingerprint determined based on a to-be-detected I/O sequence, so that whether the to-be-detected I/O sequence is a ransomware attack I/O sequence can be determined quickly, and content of data corresponding to the to-be-detected I/O sequence does not need to be calculated and detected, thereby improving a ransomware attack detection speed.

With reference to the second aspect, in some implementations of the second aspect, the attack fingerprint is determined based on a feature of the attack I/O sequence. The feature of the attack I/O sequence includes an instruction included in the attack I/O sequence and/or a storage address corresponding to the attack I/O sequence. The attack I/O sequence includes at least one instruction, and the at least one instruction in the attack I/O sequence is used to access attacked data.

With reference to the second aspect, in some implementations of the second aspect, the attack fingerprint is determined based on the feature of the attack I/O sequence and a feature of the attacked data. When the attacked data belongs to an attacked file system, the feature of the attacked data includes at least one of the following: metadata of the attacked data, metadata of the attacked file system, and content of the attacked data. When the attacked data is an attacked data block or a part of data in the attacked data block, the feature of the attacked data includes metadata of the attacked data and/or content of the attacked data.

With reference to the second aspect, in some implementations of the second aspect, the metadata of the attacked file system includes at least one of the following: identification information of the attacked data in the attacked file system and identification information of a directory in which the attacked data is located in the attacked file system.

With reference to the second aspect, in some implementations of the second aspect, an entropy value of the content of the attacked data is determined based on the content of the attacked data; and the attack fingerprint is determined based on the feature of the attack I/O sequence and the entropy value of the content of the attacked data.

With reference to the second aspect, in some implementations of the second aspect, at least one feature of the attack I/O sequence is encoded, to determine the attack fingerprint; or at least one feature of the attack I/O sequence and at least one feature of the attacked data are encoded, to determine the target fingerprint.

With reference to the second aspect, in some implementations of the second aspect, a third vector is determined based on the at least one feature of the attack I/O sequence, where the third vector is used to determine the attack fingerprint; or a fourth vector is determined based on the at least one feature of the attack I/O sequence and the at least one feature of the attacked data, where the fourth vector is used to determine the attack fingerprint.

With reference to the second aspect, in some implementations of the second aspect, an attack fingerprint library is determined based on at least one attack fingerprint. The attack fingerprint library further includes a storage address corresponding to each attack fingerprint.

With reference to the second aspect, in some implementations of the second aspect, the attack fingerprint library performs storage in a form of a key-value pair. A key in the key-value pair corresponds to the attack fingerprint, and a value in the key-value pair corresponds to the storage address corresponding to the attack fingerprint.

With reference to the second aspect, in some implementations of the second aspect, the attack fingerprint is a character string of a preset length.

According to a third aspect, an embodiment of this application provides a computing apparatus. The computing apparatus includes a module configured to implement the method according to the first aspect, the second aspect, any possible implementation of the first aspect, or any possible implementation of the second aspect.

According to a fourth aspect, an embodiment of this application provides a computing device. The computing device includes a processor. The processor is configured to: be coupled to a memory, and read and execute instructions and/or program code in the memory, to perform the method according to the first aspect, the second aspect, any possible implementation of the first aspect, or any possible implementation of the second aspect.

According to a fifth aspect, an embodiment of this application provides a chip system. The chip system includes a logic circuit. The logic circuit is configured to: be coupled to an input/output interface, and perform data transmission through the input/output interface, to perform the method according to the first aspect, the second aspect, any possible implementation of the first aspect, or any possible implementation of the second aspect.

According to a sixth aspect, an embodiment of this application provides a computer-readable storage medium. The computer-readable storage medium stores program code. When the program code is run on a computer, the computer is caused to perform the method according to the first aspect, the second aspect, any possible implementation of the first aspect, or any possible implementation of the second aspect.

According to a seventh aspect, an embodiment of this application provides a computer program product. The computer program product includes computer program code. When the computer program code is run on a computer, the computer is caused to perform the method according to the first aspect, the second aspect, any possible implementation of the first aspect, or any possible implementation of the second aspect.

### BRIEF DESCRIPTION OF DRAWINGS

FIG. 1 is a block diagram of a structure of a ransomware attack detection system according to an embodiment of this application;
FIG. 2 is a block diagram of a structure of a computing device according to an embodiment of this application;
FIG. 3 is a schematic flowchart of a ransomware attack detection method according to an embodiment of this application;
FIG. 4 is a schematic flowchart of a ransomware attack detection method according to another embodiment of this application;
FIG. 5 is a schematic flowchart of a method for determining a target fingerprint according to an embodiment of this application;
FIG. 6 is a schematic flowchart of a method for determining a target fingerprint according to another embodiment of this application;
FIG. 7 is a schematic flowchart of a method for establishing an attack fingerprint library according to an embodiment of this application;
FIG. 8 is a block diagram of a structure of a computing apparatus according to an embodiment of this application; and
FIG. 9 is a block diagram of a structure of a computing device according to an embodiment of this application.

### DESCRIPTION OF EMBODIMENTS

The following describes the technical solutions of this application with reference to the accompanying drawings.

All aspects, embodiments, or features are presented in embodiments of this application by describing a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are for representing giving an example, an illustration, or a description. Any embodiment or design solution described as an "example" in embodiments of this application should not be construed as being more preferred or having more advantages than another embodiment or design solution. Exactly, the term "example" is for presenting a concept in a specific manner.

A service scenario described in embodiments of this application is intended to describe the technical solutions in embodiments of this application more clearly, and does not constitute a limitation on the technical solutions provided in embodiments of this application. A person of ordinary skill in the art may learn that, with evolution of technologies and emergence of new service scenarios, the technical solutions provided in embodiments of this application are also applicable to a similar technical problem.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In embodiments of this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

The technical solutions in embodiments of this application may be applied to a computing device, for example, a device having a computing capability, like a server, a host, a personal computer, a notebook computer, or a desktop computer.

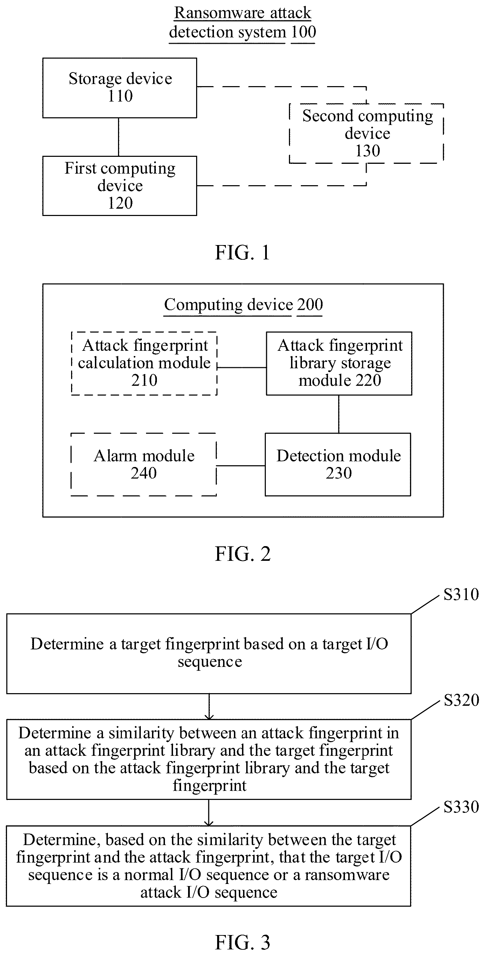

FIG. 1 is a block diagram of a structure of a ransomware attack detection system according to an embodiment of this application. The ransomware attack detection system 100 in FIG. 1 may include a storage device 110 and a first computing device 120.

The storage device 110 may be connected to the first computing device 120, that is, the first computing device 120 may access data stored in the storage device 110. The storage device 110 may be located outside the first computing device 120, that is, the storage device 110 and the first computing device 120 may be two independent devices, as shown in FIG. 1. Alternatively, the storage device 110 may be located inside the first computing device 120, that is, the storage device 110 and the first computing device 120 may be integrated into a same device. A specific type of the storage device 110 is not limited in this embodiment of this application. For example, the storage device 110 may include a volatile storage medium and/or a non-volatile storage medium. The volatile storage medium may include, for example, a random access memory (random access memory, RAM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchronous link DRAM, SLDRAM), or a direct rambus random access memory (direct rambus DRAM, DRDRAM). The non-volatile storage medium may be, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory.

In some embodiments, the storage device 110 may perform storage based on a file. Alternatively, the storage device 110 may perform storage based on a data block. Alternatively, the storage device 110 may perform storage based on an object.

In some embodiments, the storage device 110 may be a centralized storage device or a distributed storage device. The storage device 110 may belong to a storage device cluster, and the storage device cluster may include at least one storage device. A plurality of storage devices in the storage device cluster may be directly connected or connected via a network. The network may be, for example, a wide area network or a local area network. The ransomware attack detection system 100 may include the storage device cluster.

The first computing device 120 may access the data in the storage device 110 by sending an I/O sequence to the storage device 110. The I/O sequence may include at least one instruction, and each of the at least one instruction is used to access the data in the storage device 110. For example, the at least one instruction may be any one or more of the following instructions: a read instruction, a write instruction, a delete instruction, a rename instruction, and the like. The read instruction may be used to read the data in the storage device 110, and the write instruction may be used to write data into the storage device 110. The delete instruction may be used to delete the data in the storage device 110. The rename instruction may be used to rename the data in the storage device 110. The I/O sequence may further include time sequence information, and the time sequence information indicates a sequence in which the storage device 110 executes instructions based on at least one I/O sequence.

The first computing device 120 may determine a target fingerprint based on a target I/O sequence delivered to the storage device 110. The target I/O sequence is used to access target data in the storage device 110. The first computing device 120 may further determine a similarity between an attack fingerprint in an attack fingerprint library and the target fingerprint, and determine, based on the similarity, whether the target I/O sequence is a normal I/O sequence, to detect a ransomware attack.

Optionally, the ransomware attack detection system 100 in FIG. 1 may further include a second computing device 130. The second computing device 130 may be connected to the storage device 110, to access the data in the storage device 110. The second computing device 130 may be further connected to the first computing device 120. The second computing device 130 may determine a target fingerprint based on a target I/O sequence. The target I/O sequence may be obtained by the second computing device 130 from the first computing device 120. Alternatively, the target I/O sequence may be obtained by the second computing device 130 from the storage device 110. The second computing device 130 may further determine a similarity between an attack fingerprint in an attack fingerprint library and the target fingerprint, and determine, based on the similarity, whether the target I/O sequence is a normal I/O sequence, to detect a ransomware attack.

In some embodiments, the first computing device 120 and/or the second computing device 130 may belong to a computing device cluster. The computing device cluster may include at least one computing device. Any computing device in the computing device cluster may perform the method in embodiments of this application, or a plurality of computing devices in the computing device cluster may jointly perform the method in embodiments of this application. The plurality of computing devices in the computing device cluster may be directly connected or connected via a network. The network may be, for example, a wide area network or a local area network.

FIG. 2 is a diagram of a structure of a computing device according to an embodiment of this application. The computing device 200 in FIG. 2 may be the first computing device 120 in FIG. 1. Alternatively, the computing device 200 may be the second computing device 130 in FIG. 1. The computing device 200 in FIG. 2 includes an attack fingerprint library storage module 220 and a detection module 240.

The attack fingerprint library storage module 220 may store an attack fingerprint library. The attack fingerprint library stores at least one attack fingerprint, and each attack fingerprint is determined based on an attack I/O sequence in a historical ransomware attack. The historical ransomware attack may perform a simulated attack based on a ransomware attack sample in a ransomware attack sample library. The computing device 200 may obtain the attack fingerprint library by using another device connected to the computing device 200. Alternatively, the computing device 200 may determine the attack fingerprint library by using an attack fingerprint calculation module 210.

Optionally, the computing device 200 may include the attack fingerprint calculation module 210. The attack fingerprint calculation module 210 is configured to establish an attack fingerprint library. Specifically, the attack fingerprint calculation module 210 may attack a storage device (for example, the storage device 110 in FIG. 1) based on a first ransomware attack sample in the ransomware attack sample library, to determine at least one attack I/O sequence in an attack process of the first ransomware attack sample. The ransomware attack sample library stores at least one ransomware attack sample, and the first ransomware attack sample is a ransomware attack sample in the ransomware attack sample library. Each of the at least one attack I/O sequence is used to access data in the storage device. The attack fingerprint calculation module 210 may further determine the at least one attack fingerprint based on the at least one attack I/O sequence. The at least one attack I/O sequence is in one-to-one correspondence with the at least one attack fingerprint. The attack fingerprint calculation module 210 may further establish the attack fingerprint library based on the at least one attack fingerprint.

The detection module 230 may determine a target fingerprint based on a target I/O sequence. The target I/O sequence is used to access target data in the storage device (for example, the storage device 110 in FIG. 1). The target I/O sequence may be, for example, the I/O sequence sent by the first computing device 120 to the storage device 110 in FIG. 1. The detection module 230 may further determine an attack fingerprint from the attack fingerprint library storage module 220, and determine a similarity between the attack fingerprint and the target fingerprint. The detection module 230 may further determine, based on the similarity between the target fingerprint and the attack fingerprint, that the target I/O sequence is a normal I/O sequence or a ransomware attack I/O sequence.

Optionally, the computing device 200 may further include an alarm module 240. The alarm module 240 is configured to: when it is determined that the target I/O sequence is the ransomware attack I/O sequence, determine that a ransomware attack is detected, to generate an alarm.

The computing device 200 may determine a target fingerprint corresponding to an I/O sequence in real time, and compare the target fingerprint with the attack fingerprint in the attack fingerprint library, so that whether the I/O sequence is a ransomware attack I/O sequence can be determined quickly, and content of data corresponding to the I/O sequence does not need to be calculated and detected, thereby improving a ransomware attack detection speed.

FIG. 3 is a schematic flowchart of a ransomware attack detection method according to an embodiment of this application. The method in FIG. 3 may be performed by a computing device. The computing device may be the first computing device 120 or the second computing device 130 in FIG. 1. Alternatively, the computing device may be the computing device 200 in FIG. 2. In FIG. 3, the following steps are included.

S310: Determine a target fingerprint based on a target I/O sequence.

The computing device may determine, based on the target I/O sequence, the target fingerprint corresponding to the target I/O sequence. The target fingerprint is used to determine whether the target I/O sequence is a normal I/O sequence. The target fingerprint may be an extraction or a description of an attack attribute in a behavior feature of the target I/O sequence, that is, the target fingerprint may indicate the attack attribute of the target I/O sequence. The attack attribute may be an attribute for a ransomware attack.

A specific form of the target fingerprint is not limited in this embodiment of this application. For example, the target fingerprint may be represented as a one-dimensional or multidimensional vector, or may be represented as a character string of a preset length. The character string of the preset length may include at least one character, and the at least one character may include any one or more of a digit, a letter, and a symbol. For example, the target fingerprint may be an N-dimensional vector, or the target fingerprint may be a 256-bit character string. N is a positive integer greater than or equal to 1.

The target I/O sequence is used to access target data in a storage device. For example, the target I/O sequence may be an I/O sequence sent by the first computing device 120 to the storage device 110 in FIG. 1, and the target I/O sequence is used to access the target data in the storage device 110. The target I/O sequence may include at least one instruction, and each of the at least one instruction is used to access the target data. For example, the at least one instruction may be any one or more of the following instructions: a read instruction, a write instruction, a delete instruction, a rename instruction, and the like. The target I/O sequence may further include time sequence information, and the time sequence information indicates a sequence in which the storage device 110 executes instructions based on at least one I/O sequence.

When the storage device performs storage based on a file, the target data may belong to a file system, that is, the target data may be all or a part of data of a file in the file system, or the target data may be a directory in the file system. When the storage device performs storage based on a data block, the target data may be a data block or a part of content in the data block.

Optionally, the computing device may determine the target fingerprint based on the feature of the target I/O sequence. The feature of the target I/O sequence includes an instruction included in the target I/O sequence and/or a storage address corresponding to the target I/O sequence. When the target data belongs to the file system, the at least one instruction included in the target I/O sequence may be, for example, a read instruction, a write instruction, a delete instruction, or a rename instruction. When the target data is a data block or a part of data in the data block, the at least one instruction included in the target I/O sequence may be, for example, a read instruction and/or a write instruction. The storage address corresponding to the target I/O sequence may be a storage address of the target data corresponding to the target I/O sequence. The storage address may be a physical address or a logical address. This is not limited in this embodiment of this application. When the storage address is the logical address, the storage address may be, for example, a page (page) index or a logical block address (logical block address, LBA).

Optionally, the computing device may determine the target fingerprint based on the feature of the target I/O sequence and a feature of the target data. When the target data belongs to the file system, the feature of the target data includes at least one of the following: metadata of the target data, metadata of the file system in which the target data is located, and content of the target data. When the target data is a data block or a part of data in the data block, the target data includes metadata of the target data and/or content of the target data.

S320: Determine a similarity between an attack fingerprint in an attack fingerprint library and the target fingerprint based on the attack fingerprint library and the target fingerprint.

After determining the target fingerprint corresponding to the target I/O sequence, the computing device may compare the target fingerprint with the attack fingerprint included in the attack fingerprint library, to determine whether the target I/O sequence is a normal I/O sequence. The attack fingerprint library includes at least one attack fingerprint, and the at least one attack fingerprint is determined based on an attack I/O sequence in a historical ransomware attack. The historical ransomware attack may perform a simulated attack based on a ransomware attack sample in a ransomware attack sample library.

Optionally, the computing device may determine the attack fingerprint library, or the computing device may receive an attack fingerprint library from another device. The another device is a device connected to the computing device.

Optionally, the computing device may determine a similarity between a first attack fingerprint and the target fingerprint according to a similarity evaluation algorithm. The first attack fingerprint is one attack fingerprint in the attack fingerprint library. Alternatively, the computing device may determine a first similarity set between a first attack fingerprint and the target fingerprint according to at least one similarity evaluation algorithm. The first similarity set includes at least one first similarity, and each first similarity is determined according to one similarity evaluation algorithm. The computing device may further determine a similarity between the first attack fingerprint and the target fingerprint based on the first similarity set. A specific similarity evaluation algorithm is not limited in this embodiment of this application. For example, the similarity evaluation algorithm may include a clustering algorithm, an editing distance algorithm, and a cosine similarity algorithm.

S330: Determine, based on the similarity between the target fingerprint and the attack fingerprint, that the target I/O sequence is a normal I/O sequence or a ransomware attack I/O sequence.

When the similarity between the target fingerprint and the first attack fingerprint is greater than or equal to a first preset threshold, the computing device may determine that the target I/O sequence is the ransomware attack I/O sequence. In other words, when determining that there is an attack fingerprint whose similarity to the target fingerprint is greater than or equal to the first preset threshold, the computing device may stop calculating a similarity between the target fingerprint and another attack fingerprint in the attack fingerprint library. The another attack fingerprint is an attack fingerprint whose similarity to the target fingerprint has not been calculated in the attack fingerprint library.

When a similarity between the target fingerprint and each attack fingerprint in the attack fingerprint library is less than the first preset threshold, the computing device may determine that the target I/O sequence is the normal I/O sequence. A specific value of the first preset threshold is not limited in this embodiment of this application, and may be set based on an actual requirement. For example, the first preset threshold may be 0.6, 8, or 85.

When the computing device determines that the target I/O sequence is the ransomware attack I/O sequence, the computing device may further generate an alarm, to notify a user that a ransomware attack may be occurring currently.

In some embodiments, the attack fingerprint library may store a storage address corresponding to an attack fingerprint. The storage address corresponding to the attack fingerprint is a storage address of data corresponding to an attack I/O sequence for determining the attack fingerprint. The storage address may be a logical address or a physical address. This is not limited in this embodiment of this application. Alternatively, the attack fingerprint library may further include a mapping relationship between each attack fingerprint and a storage address corresponding to each attack fingerprint. The storage address corresponding to each attack fingerprint may be used to recover attacked data corresponding to the storage address.

When the computing device determines that the target I/O sequence is the ransomware attack I/O sequence, the computing device may further directly add the target fingerprint to the attack fingerprint library. Alternatively, the computing device may directly add the target fingerprint and a storage address corresponding to the target fingerprint to the attack fingerprint library. The storage address corresponding to the target fingerprint is the storage address corresponding to the target I/O sequence. The storage address corresponding to the target fingerprint is used to recover content of the attacked data. Alternatively, when the computing device determines that a similarity between the target fingerprint and a second attack fingerprint is greater than or equal to the first preset threshold, and the similarity between the target fingerprint and the second attack fingerprint is less than a second preset threshold, the computing device may add the target fingerprint to the attack fingerprint library, or may add the target fingerprint and a storage address corresponding to the target fingerprint to the attack fingerprint library. The second attack fingerprint is an attack fingerprint that has a highest similarity to the target fingerprint in the attack fingerprint library. The second preset threshold is greater than the first preset threshold.

In this embodiment of this application, the target fingerprint corresponding to the I/O sequence may be determined in real time, and the target fingerprint is compared with the attack fingerprint in the attack fingerprint library, so that whether the I/O sequence is a ransomware attack I/O sequence can be determined quickly, and content of data corresponding to the I/O sequence does not need to be calculated and detected, thereby improving a ransomware attack detection speed.

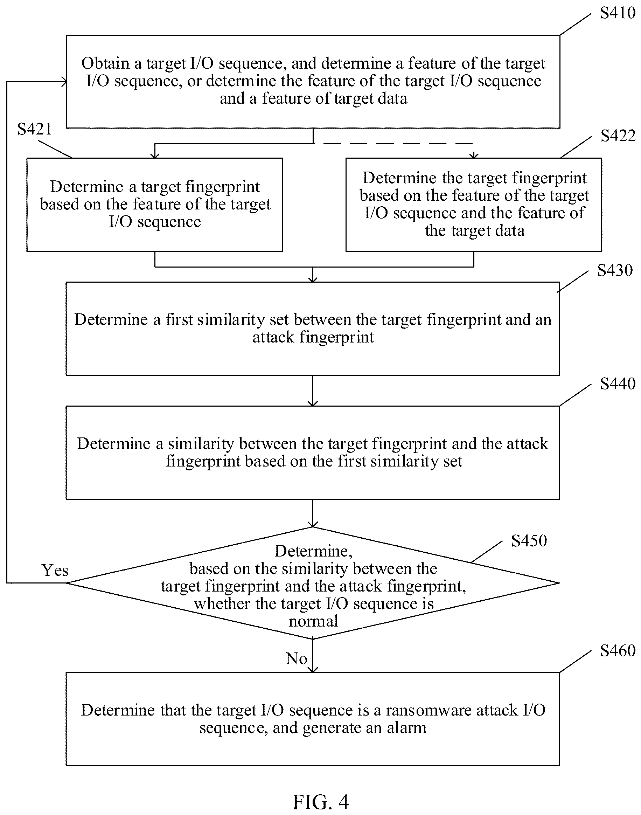

FIG. 4 is a schematic flowchart of a ransomware attack detection method according to an embodiment of this application. The method in FIG. 4 may be performed by a computing device. The computing device may be the first computing device 120 or the second computing device 130 in FIG. 1. Alternatively, the computing device may be the computing device 200 in FIG. 2. In FIG. 4, the following steps are included.

S410: Obtain a target I/O sequence, and determine a feature of the target I/O sequence, or determine the feature of the target I/O sequence and a feature of target data.

The computing device may obtain an I/O sequence used to access data in a storage device in real time, where the I/O sequence is the target I/O sequence. The target I/O sequence may be sent by the computing device to the storage device. Alternatively, the target I/O sequence may be sent by a device other than the computing device to the storage device.

The computing device may directly determine, based on the target I/O sequence, an instruction included in the target I/O sequence and/or a storage address corresponding to the target I/O sequence, that is, determine the feature of the target I/O sequence. After determining the feature of the target I/O sequence, the computing device may perform step S421.

After determining the storage address corresponding to the target I/O sequence, the computing device may further determine the target data based on the storage address corresponding to the target I/O sequence. The target data is data at a storage address corresponding to the target I/O sequence. After determining the target data, the computing device may further determine the feature of the target data. When the target data belongs to a file system, the feature of the target data includes at least one of the following: metadata of the target data, metadata of the file system in which the target data is located, and content of the target data. When the target data is a data block or a part of data in the data block, the feature of the target data includes metadata of the target data and/or content of the target data. After determining the feature of the target I/O sequence and the feature of the target data, the computing device may perform step S422.

S421: Determine a target fingerprint based on the feature of the target I/O sequence.

Optionally, the computing device may encode at least one feature of the target I/O sequence, to determine the target fingerprint. For example, the computing device may input the at least one feature of the target I/O sequence into a first encoding model, to determine the target fingerprint. The first encoding model indicates a mapping relationship between the feature of the target I/O sequence and the target fingerprint.

In some embodiments, the first encoding model may be a model obtained through training by using machine learning based on a first training data set. The first training data set may include a feature of an I/O sequence, a fingerprint, and a mapping relationship between the feature of the I/O sequence and the fingerprint.

In some embodiments, before step S421, the computing device may obtain a trained first encoding model. Alternatively, before step S421, the computing device may obtain the first training data set, and train a model based on the first training data set, to obtain a trained first encoding model.

Optionally, the computing device may determine a first vector based on the at least one feature of the target I/O sequence, to determine the target fingerprint based on the first vector. The first vector may be an N-dimensional vector. N is a positive integer greater than or equal to 1. The N-dimensional vector may be a vector including N columns of elements, and each of the N columns of elements may include one or more elements. Alternatively, the N-dimensional vector may be a vector including N rows of elements, and each of the N rows of elements may include one or more elements. Each element in the first vector may include at least one character. The at least one character may include any one or more of a digit, a letter, and a symbol.

For example, all the instructions included in the target I/O sequence may be considered as a whole, and are used as one feature of the target I/O sequence. Alternatively, each instruction included in the target I/O sequence may be independently used as one feature of the target I/O sequence.

S422: Determine the target fingerprint based on the feature of the target I/O sequence and the feature of the target data.

Optionally, the computing device may encode at least one feature of the target I/O sequence and at least one feature of the target data, to determine the target fingerprint. For example, the computing device may input the at least one feature of the target I/O sequence and the at least one feature of the target data into a second encoding model, to determine the target fingerprint. The second encoding model indicates a mapping relationship between the feature of the target I/O sequence, the feature of the target data, and the target fingerprint.

In some embodiments, the second encoding model may be a model obtained through training by using machine learning based on a second training data set. The second training data set may include a feature of an I/O sequence, a feature of data, a fingerprint, and a mapping relationship between the feature of the I/O sequence, the feature of the data, and the fingerprint.

In some embodiments, before step S422, the computing device may obtain a trained second encoding model. Alternatively, before step S422, the computing device may obtain the second training data set, and train a model based on the second training data set, to obtain a trained second encoding model.

Optionally, the computing device may determine a second vector based on the at least one feature of the target I/O sequence and the at least one feature of the target data. The computing device may further determine the target fingerprint based on the second vector. The second vector may be an M-dimensional vector. M is a positive integer greater than or equal to 1. The second vector may be a vector including M columns of elements, and each of the M columns of elements may include one or more elements. Alternatively, the second vector may be a vector including M rows of elements, and each of the M rows of elements may include one or more elements. Each element in the second vector may include at least one character. The at least one character may include any one or more of a digit, a letter, and a symbol.

It should be understood that either step S421 or step S422 may be performed.

S430: Determine a first similarity set between the target fingerprint and an attack fingerprint in an attack fingerprint library.

The computing device may determine the first similarity set between the target fingerprint and a first attack fingerprint according to at least one similarity evaluation algorithm. The first attack fingerprint is any attack fingerprint in the attack fingerprint library. The first similarity set may include a first similarity determined according to each similarity evaluation algorithm. For example, the computing device may determine the first similarity set between the target fingerprint and the first attack fingerprint according to P algorithms in algorithms whose complexity is O(1) such as a clustering algorithm, an editing distance algorithm, and a cosine similarity, where P is a positive integer greater than or equal to 1. The first similarity set includes P first similarities. Each of the P first similarities is determined according to one similarity evaluation algorithm.

S440: Determine a similarity between the target fingerprint and the attack fingerprint based on the first similarity set.

After determining the first similarity set, the computing device may further determine the similarity between the target fingerprint and the attack fingerprint based on the first similarity set. For example, the computing device may calculate at least one first similarity in the first similarity set according to a bagging (bagging) algorithm and/or a boosting (boosting) algorithm, to determine a second similarity. The computing device may use the second similarity as the similarity between the target fingerprint and the attack fingerprint.

For example, assuming that the target fingerprint is 12110200, and the first attack fingerprint is 12110201, the computing device may determine the first similarity y₁ between the target fingerprint and the attack fingerprint according to the clustering algorithm. The computing device may further determine the first similarity y₂ between the target fingerprint and the attack fingerprint according to the editing distance algorithm. The computing device may directly use y₁ or y₂ as a similarity between the target fingerprint and the first attack fingerprint. Alternatively, the computing device may calculate y₁ and y₂ according to the bagging algorithm, to determine y₃, and use y₃ as a similarity between the target fingerprint and the first attack fingerprint.

S450: Determine, based on the similarity between the target fingerprint and the attack fingerprint, whether the target I/O sequence is normal.

The computing device may determine, by comparing the similarity between the target fingerprint and the attack fingerprint with a first preset threshold, whether the target I/O sequence is normal. For example, when determining that the similarity between the target fingerprint and the first attack fingerprint is greater than or equal to the first preset threshold, the computing device may determine that the target I/O sequence is a ransomware attack I/O sequence, and perform step S460. The first attack fingerprint is any attack fingerprint in the attack fingerprint library. The computing device may further determine that the target I/O sequence is a normal I/O sequence when determining that a similarity between the target fingerprint and each attack fingerprint in the attack fingerprint library is less than the first preset threshold.

After determining that the target I/O sequence is the normal I/O sequence, the computing device may continue to obtain a new I/O sequence, to detect whether the new I/O sequence is normal. That is, after determining that the target I/O sequence is the normal I/O sequence, the computing device may repeatedly perform step S410 to step S460 on the new target I/O sequence.

S460: Determine that the target I/O sequence is the ransomware attack I/O sequence, and generate an alarm.

When determining that the similarity between the target fingerprint and the first attack fingerprint is greater than or equal to the first preset threshold, the computing device may determine that the target I/O sequence is the ransomware attack I/O sequence, to generate an alarm, to notify a user that a ransomware attack may be occurring currently.

The computing device may determine a target fingerprint corresponding to an I/O sequence in real time, and compare the target fingerprint with the attack fingerprint in the attack fingerprint library, so that whether the I/O sequence is a ransomware attack I/O sequence can be determined quickly, and content of data corresponding to the I/O sequence does not need to be calculated and detected, thereby improving a ransomware attack detection speed.

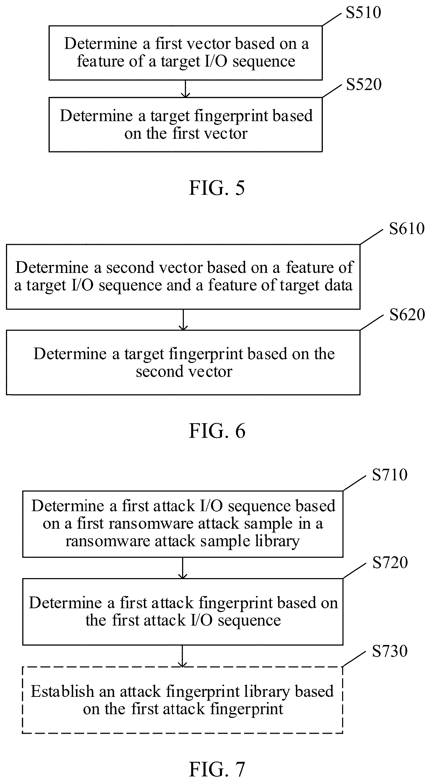

FIG. 5 is a schematic flowchart of a method for determining a target fingerprint according to an embodiment of this application. The method in FIG. 5 may be performed by a computing device. The computing device may be the first computing device 120 or the second computing device 130 in FIG. 1. Alternatively, the computing device may be the computing device 200 in FIG. 2. It should be understood that the method in FIG. 5 is only a possible implementation of step S310 or step S421. Step S310 or step S421 may alternatively be implemented in another implementation. In FIG. 5, the following steps are included.

S510: Determine a first vector based on a feature of a target I/O sequence.

The computing device may determine the first vector based on at least one feature of the target I/O sequence. The feature of the target I/O sequence includes an instruction included in the target I/O sequence and/or a storage address corresponding to the target I/O sequence. The first vector may be a vector including N columns of elements, or the first vector may be a vector including N rows of elements. N is a positive integer greater than or equal to 1.

When the first vector is the vector including N columns of elements, each column of elements in the first vector may correspond to one or more features of the target I/O sequence. Alternatively, one feature of the target I/O sequence may correspond to one or more columns of elements in the first vector. When the first vector is the vector including N rows of elements, each row of elements in the first vector may correspond to one or more features of the target I/O sequence. Alternatively, one feature of the target I/O sequence may correspond to one or more rows of elements in the first vector.

The following uses an example in which the first vector is the vector including N columns of elements for description. It should be understood that an implementation in which the first vector includes N rows of elements is similar to an implementation in which the first vector includes N columns of elements. For brevity of description, details are not described again.

Optionally, the computing device may determine one or more columns of elements in the first vector according to the instruction included in the target I/O sequence. For example, the computing device may determine the one or more columns of elements based on a first mapping relationship and the instruction included in the target I/O sequence. The first mapping relationship indicates a mapping relationship between the instruction included in the target I/O sequence and the one or more columns of elements.

When the first mapping relationship indicates a mapping relationship between the instruction included in the target I/O sequence and one column of elements, the first mapping relationship may indicate an instruction identifier corresponding to each preset instruction.

For example, it is assumed that the first mapping relationship is shown in the following Table 1.

**Table 1 First mapping relationship table**

| Preset instruction | Instruction identifier |
|---|---|
| Read instruction | 1 |
| Write instruction | 2 |
| Delete instruction | 3 |

If the instruction included in the target I/O sequence is a read instruction, a write instruction, a read instruction, a delete instruction, and a write instruction, the computing device may determine, based on the target I/O sequence and the first mapping relationship shown in Table 1, one column of elements corresponding to the target I/O sequence. This column of elements may be [1, 2, 1, 3, 2]^{T}. T represents transposition. It should be understood that a type of the instruction identifier is not limited in this embodiment of this application. For example, the instruction identifier may include at least one character, and the at least one character may include any one or more of a digit, a letter, and a symbol.

When the first mapping relationship indicates a mapping relationship between the instruction included in the target I/O sequence and a plurality of columns of elements, the first mapping relationship may indicate an instruction identifier corresponding to a specific instruction and an instruction identifier corresponding to an instruction other than the specific instruction.

For example, it is assumed that the first mapping relationship is shown in the following Table 2.

**Table 2 First mapping relationship table**

| Instruction | Instruction identifier |
|---|---|
| Specific instruction | 1 |
| Instruction other than the specific instruction | 0 |

If the instruction included in the target I/O sequence is a read instruction, a write instruction, a read instruction, a delete instruction, and a write instruction, the computing device may determine, based on the target I/O sequence and the first mapping relationship shown in Table 2, a plurality of columns of elements corresponding to the target I/O sequence. One column of elements determined when the read instruction is used as the specific instruction is [1, 0, 1, 0, 0]^{T}. This column of elements may represent that the target I/O sequence includes five instructions, and the 1^{st} instruction and the 3^{rd} instruction are read instructions. Similarly, one column of elements determined when the write instruction is used as the specific instruction is [0, 1, 0, 0, 1]^{T}. This column of elements may represent that in the five instructions in the target I/O sequence, the 2^{nd} instruction and the 5^{th} instruction are write instructions. One column of elements determined when the delete instruction is used as the specific instruction is [0, 0, 0, 1, 0]^{T}. This column of elements may represent that in the five instructions in the target I/O sequence, the 4^{th} instruction is a delete instruction. It should be understood that a type of the instruction identifier is not limited in this embodiment of this application. For example, the instruction identifier may include at least one character, and the at least one character may include any one or more of a digit, a letter, and a symbol.

Optionally, the computing device may determine one or more columns of elements in the first vector based on the storage address corresponding to the target I/O sequence. For example, the computing device may determine one or more columns of elements based on a second mapping relationship and the storage address corresponding to the target I/O sequence. The second mapping relationship indicates a mapping relationship between the storage address corresponding to the target I/O sequence and the one or more columns of elements. The storage address corresponding to the target I/O sequence may be a physical address or a logical address. This is not limited in this embodiment of this application.

For example, it is assumed that the storage address corresponding to the target I/O sequence is an LBA address, and the LBA address is 7600. Binary code corresponding to the LBA address is 1100101100100. The computing device may determine, based on the storage address corresponding to the target I/O sequence and the second mapping relationship, that one column of elements corresponding to the target I/O sequence is [7600], or the column of elements may be [1100101100100]. It should be understood that the column of elements may alternatively be determined based on code, in another number system, of the storage address corresponding to the target I/O sequence, for example, octal code or hexadecimal code. This is not limited in this embodiment of this application.

Optionally, the computing device may determine one or more columns of elements in the first vector based on the instruction included in the target I/O sequence and the storage address corresponding to the target I/O sequence. For example, the computing device may determine one or more columns of elements based on a third mapping relationship, the instruction included in the target I/O sequence, and the storage address corresponding to the target I/O sequence. The third mapping relationship indicates a mapping relationship between the instruction included in the target I/O sequence, the storage address corresponding to the target I/O sequence, and a column element.

For example, if the instruction included in the target I/O sequence is a read instruction, a write instruction, a read instruction, a delete instruction, and a write instruction, and the LBA address corresponding to the target I/O sequence is 7600, the computing device may determine one column of elements in the first vector based on the instruction included in the target I/O sequence, the LBA address corresponding to the target sequence, and the third mapping relationship. This column of elements may be [1, 2, 1, 3, 2, 7600]^{T}. In this column of elements, a part of data corresponds to the five instructions included in the target I/O sequence, and the other part of data corresponds to the storage address corresponding to the target I/O sequence. It should be understood that this column of elements may alternatively be represented in another form, for example, [12132, 7600]^{T} or [7600, 1, 2, 1, 3, 2]^{T}.

Optionally, the computing device may determine the first vector based on a first vector generation model and the at least one feature of the target I/O sequence. The first vector generation model may include any one or more of the first mapping relationship, the second mapping relationship, or the third mapping relationship. Alternatively, the first vector generation model may include a mapping relationship that is more complex than the first mapping relationship, the second mapping relationship, or the third mapping relationship. The first vector generation model may be a model obtained through training by using machine learning based on a third training data set. The third training data set may include a feature of an I/O sequence, a vector, and a mapping relationship between the feature of the I/O sequence and the vector.

S520: Determine the target fingerprint based on the first vector.

Optionally, after determining the first vector, the computing device may use the first vector as the target fingerprint, that is, the target fingerprint is the first vector. The first vector includes at least one of the following columns of elements: one or more columns of elements determined based on the instruction included in the target I/O sequence and/or the storage address corresponding to the target I/O sequence.

Optionally, after determining the first vector, the computing device may determine the target fingerprint based on the first vector and a fourth mapping relationship. The fourth mapping relationship indicates a mapping relationship between the first vector and the target fingerprint. The target fingerprint may be a character string of a preset length. The preset length is not limited in this embodiment of this application. The character string of the preset length may include at least one character, and the at least one character may include any one or more of a digit, a letter, and a symbol. For example, the target fingerprint may be a character string of 256 bits.

In some embodiments, the fourth mapping relationship may indicate a mapping relationship between an element in one target region in the first vector and one or more bits of data in the target fingerprint. The element in the target region may include at least one column of elements in the first vector, or may include at least one row of elements, or may include one block of elements. A quantity of elements in the block of elements is not limited in this embodiment of this application, for example, may be 1, 2, or 4.

For example, the target region includes one column of elements. The fourth mapping relationship may indicate a mapping relationship between the elements in the target region and one bit of data of the target fingerprint. For example, if one column of elements included in the target region is [0, 0, 0, 1, 0]^{T}, the computing device may determine, based on the elements included in the target region and the fourth mapping relationship, that one bit of data in the target fingerprint corresponding to the elements included in the target region is 2.

For example, the target region includes one column of elements. The fourth mapping relationship may indicate a mapping relationship between the elements in the target region and a plurality of bits of data of the target fingerprint. For example, if one column of elements included in the target region is [1, 0, 1, 0, 0]^{T}, the computing device may determine, based on the elements included in the target region and the fourth mapping relationship, that one bit of data in the target fingerprint corresponding to the elements included in the target region is 20.

It should be understood that a manner of determining the target fingerprint when the target region includes one row of elements or one block of elements is similar to the foregoing manner. For brevity of description, details are not described again.

For example, when the first vector includes data of a letter or symbol type, the computing device may convert the data of the letter or symbol type into data of a digit type, to determine the target fingerprint based on the first vector. For example, the computing device may convert the data of the letter or symbol type into corresponding American standard code for information interchange (American standard code for information interchange, ASCII). Alternatively, the computing device may convert the data of the letter or symbol type into corresponding digital data in a preset encoding rule according to the preset encoding rule. Alternatively, the computing device may convert data of a digit type in the first vector into data of a letter or symbol type, to determine the target fingerprint based on the first vector.

Optionally, the computing device may determine the target fingerprint based on a first fingerprint generation model and the first vector. The first fingerprint generation model may include the fourth mapping relationship, or may include a mapping relationship that is more complex than the fourth mapping relationship. The first fingerprint generation model may be a model obtained through training by using machine learning based on a fourth training data set. The fourth training data set may include a vector, a fingerprint, and a mapping relationship between the vector and the fingerprint.

In this embodiment of this application, considering that an instruction included in a ransomware attack I/O sequence and/or a storage address corresponding to the ransomware attack I/O sequence have/has some special characteristics in comparison with a normal I/O sequence, the computing device may determine the first vector based on the instruction included in the target I/O sequence and/or the storage address corresponding to the target I/O sequence, to determine the target fingerprint. The target fingerprint may be used to be compared with an attack fingerprint in an attack fingerprint library, to detect a ransomware attack.

FIG. 6 is a schematic flowchart of a method for determining a target fingerprint according to an embodiment of this application. The method in FIG. 6 may be performed by a computing device. The computing device may be the first computing device 120 or the second computing device 130 in FIG. 1. Alternatively, the computing device may be the computing device 200 in FIG. 2. It should be understood that the method in FIG. 6 is only a possible implementation of step S310 or step S422. Step S310 or step S422 may alternatively be implemented in another implementation. In FIG. 6, the following steps are included.

S610: Determine a first vector based on a feature of a target I/O sequence and a feature of target data.

The computing device may determine a second vector based on at least one feature of the target I/O sequence and at least one feature of the target data. The feature of the target I/O sequence includes an instruction included in the target I/O sequence and/or a storage address corresponding to the target I/O sequence.

When the target data belongs to a file system, the feature of the target data may include at least one of the following: metadata of the target data, metadata of the file system in which the target data is located, and content of the target data. The target data may be a target file, a part of content in the target file, a target directory, or the like. The metadata of the target data is used to describe an attribute of the target data.

When the target data is the target file, the metadata of the target data may include, for example, at least one of the following: a size of the target data, a name of the target data, a type of the target data, time information of the target data, permission information of the target data, and the like. The type of the target data may be represented by using an extension name (that is, a suffix) and/or a magic number (magic number) of the target data. The time information of the target data may include at least one of the following: creation time of the target data, latest modification time of the target data, or latest access time of the target data. The metadata of the file system in which the target data is located includes at least one of the following: identification information of the target data in the file system and identification information of a directory in which the target data is located in the file system. When the target data is the part of content in the target file, the metadata of the target data is metadata of the target file in which the target data is located, and the metadata of the file system in which the target data is located is metadata of a file system in which the target file is located. When the target data is the target directory, the metadata of the target data may include, for example, at least one of the following: a name of the target data, time information of the target data, permission information of the target data, and the like. The time information of the target data may include at least one of the following: creation time of the target data, latest modification time of the target data, or latest access time of the target data. The metadata of the file system in which the target data is located includes identification information of the target directory in the file system.

When the target data is a data block or a part of data in the data block, the feature of the target data includes metadata of the target data and/or content of the target data. The target data may be a data block or a part of content in the data block. When the target data is the data block, the metadata of the target data includes at least one of the following: pool (pool) metadata, logical unit number (logical unit number, LUN) identification information (identity, ID), an LBA address, and time information. The time information may include at least one of the following: creation time of the target data, latest modification time of the target data, or latest access time of the target data. When the target data is the part of content in the data block, the metadata of the target data is metadata of the data block in which the target data is located.

The second vector may be a vector including M columns of elements, or the second vector may be a vector including M rows of elements. M is a positive integer greater than or equal to 1. A value relationship between N and M is not limited in this embodiment of this application.

When the second vector is the vector including M columns of elements, each column of elements in the second vector may correspond to one or more features, and the one or more features are features of the target I/O sequence and/or the target data. Alternatively, one feature of the target I/O sequence may correspond to one or more columns of elements in the second vector, and one feature of the target data may correspond to one or more columns of elements in the second vector. Alternatively, when the second vector is the vector including M rows of elements, each row of elements in the second vector may correspond to one or more features, and the one or more features are features of the target I/O sequence and/or the target data. Alternatively, one feature of the target I/O sequence may correspond to one or more rows of elements in the second vector, and one feature of the target data may correspond to one or more rows of elements in the second vector.

The following uses an example in which the second vector is the vector including M columns of elements for description. It should be understood that an implementation in which the second vector includes M rows of elements is similar to an implementation in which the second vector includes M columns of elements. For brevity of description, details are not described again.

Optionally, the computing device may determine one or more columns of elements in the second vector based on the metadata of the target data. For example, the computing device may determine one or more columns of elements based on a fifth mapping relationship and the metadata of the target file. The fifth mapping relationship indicates a mapping relationship between the metadata of the target data and the one or more columns of elements. For example, the fifth mapping relationship may indicate a mapping relationship between one type of metadata of the target data and the one or more columns of elements, or may indicate a mapping relationship between a plurality of types of metadata of the target data and the one or more columns of elements.

For example, assuming that the size of the target data is 1.2 megabytes (Megabyte, MB), the computing device may determine that one column of elements is [1.2] based on the size of the target data and the fifth mapping relationship. Assuming that the name of the target data is "test1", the computing device may determine that one column of elements is [test1] based on the name of the target data and the fifth mapping relationship. It is assumed that when the fifth mapping relationship indicates that a type of the file is a portable data format (portable document format, PDF), a corresponding element is 4. If the type of the target data is PDF, the computing device may determine that one column of elements is [4] based on the type of the target data and the fifth mapping relationship. Assuming that the latest access time of the target data is June 29, 2023, the computing device may determine that one column of elements is [20330629] based on the name of the target data and the fifth mapping relationship. It is assumed that when the fifth mapping relationship indicates that permission information of the file is read-only, a corresponding element is or. If the permission information of the target data is read-only, the computing device may determine that one column of elements is [or] based on the permission information of the target data and the fifth mapping relationship. Assuming that LUN identification information of the target data is 1, the computing device may determine that one column of elements is [1] based on the LUN identification information of the target data and the fifth mapping relationship.

For example, it is assumed that the size of the target data is 1.2 MB, the name of the target data is "test1", and the type of the target data is PDF. The computing device may determine that one column of elements is [1.2, test1, 4]^{T} based on the size, the name, and the type of the target data, and the fifth mapping relationship. Alternatively, the computing device may determine two columns of elements, respectively [1.2, test1]^{T} and [4]. Alternatively, the computing device may determine three columns of elements, respectively [1.2], [test1], and [4]. It should be understood that the computing device may further determine one or more columns of elements in another form, for example, [test1, 4, 1.2]^{T}, [1.2, 4]^{T}, and [test1]. This is not limited in this embodiment of this application.

Optionally, the computing device may determine one or more columns of elements in the second vector based on the metadata of the file system in which the target data is located. For example, the computing device may determine one or more columns of elements based on a sixth mapping relationship and the metadata of the file system. The sixth mapping relationship indicates a mapping relationship between the metadata of the file system and the one or more columns of elements. For example, the sixth mapping relationship may indicate a mapping relationship between one type of metadata of the file system and one column of elements, or may indicate a mapping relationship between a plurality of types of metadata of the file system and one column of elements.

For example, it is assumed that the identification information of the target data in the file system is 115, and the identification information of the directory in which the target data is located in the file system is 13. The computing device may determine that one column of elements is [115] based on the identification information of the target data in the file system and the sixth mapping relationship. Alternatively, the computing device may determine that one column of elements is [13] based on the identification information of the directory in which the target data is located in the file system and the sixth mapping relationship. Alternatively, the computing device may determine that two columns of elements are respectively [115] and [13], based on the identification information of the target data in the file system, the identification information of the directory in which the target data is located in the file system, and the sixth mapping relationship, or determine that one column of elements is [115, 13]^{T}.

Optionally, the computing device may determine one or more columns of elements in the second vector based on the content of the target data. For example, the computing device may determine an entropy value of the content of the target data based on the content of the target data, to determine the one or more columns of elements based on the entropy value of the content of the target data. The entropy value may be an information entropy, a relative entropy, a cross entropy, or the like. This is not limited in this embodiment of this application.

In some embodiments, the computing device may determine one entropy value based on overall content of the target data, and determine one or more columns of elements in the second vector based on the entropy value. Alternatively, the computing device may divide the content of the target data into a plurality of parts, and determine an entropy value of each part, to determine one or more columns of elements in the second vector.

For example, assuming that the entropy value of the content of the target data is 2.2836, the computing device may determine that one column of elements is [2.2836] based on the content of the target data. Alternatively, it is assumed that the content of the target data may be divided into two parts, where an entropy value of a first part of the content is 3.4528, and an entropy value of a second part of the content is 2.4002. The computing device may determine that one column of elements is [3.4528, 2.4002]^{T} based on the content of the two parts of the target data. Alternatively, the computing device may determine two columns of elements, respectively [3.4528] and [2.4002], based on the content of the two parts of the target data. It should be understood that the content of the target data may alternatively be divided into three or more parts, and each part may correspond to one entropy value, so that one or more columns of elements are determined based on the entropy value of each part.

Optionally, the computing device may determine one or more columns of elements in the second vector based on at least two of the metadata of the target data, the metadata of the file system, or the content of the target data. For example, the computing device may determine the one or more columns of elements based on at least two of the metadata of the target data, the metadata of the file system, or the content of the target data, and a seventh mapping relationship. The seventh mapping relationship indicates a mapping relationship between the at least two of the metadata of the target data, the metadata of the file system, or the content of the target data and the one or more columns of elements.

For example, assuming that the size of the target data is 1.2 MB, the identification information of the target data in the file system is 115, and the entropy value that may be determined based on the content of the target data is 2.2836, the computing device may determine that one column of elements is [1.2, 115, 2.2836]^{T} based on the size of the target data, the identification information of the target data in the file system, the content of the target data, and the seventh mapping relationship. The three parts in this column of elements respectively correspond to the size of the target data, the identification information of the target data in the file system, and the content of the target data. Alternatively, the computing device may determine two columns of elements, respectively [1.2, 115]^{T} and [2.2836]. Elements in [1.2, 115]^{T} respectively correspond to the size of the target data and the identification information of the target data in the file system, and [2.2836] corresponds to the content of the target data. Alternatively, the computing device may determine three columns of elements, respectively [1.2], [115], and [2.2836]. The three columns of elements respectively correspond to the size of the target data, the identification information of the target data in the file system, and the content of the target data.

Optionally, the computing device may determine one or more columns of elements in the second vector based on the feature of the target I/O sequence and the feature of the target data. For example, the computing device may determine the one or more columns of elements based on an eighth mapping relationship, the feature of the target I/O sequence, and the feature of the target data. The eighth mapping relationship indicates a mapping relationship between the feature of the target I/O sequence, the feature of the target data, and the one or more columns of elements.

For example, assuming that the instruction included in the target I/O sequence is a read instruction, a write instruction, a read instruction, a delete instruction, and a write instruction, and the size of the target data is 1.2 MB, the computing device may input the instruction included in the target I/O sequence and the size of the target data into the eighth mapping relationship, to determine that one column of elements is [1.2, 1, 2, 1, 3, 2]^{T}. A part (for example, the 1^{st} piece of data) of this column of elements corresponds to the size of the target data, and the other part of this column of elements corresponds to the instructions included in the target I/O sequence. Alternatively, the computing device may determine two columns of elements, respectively [1, 2, 1, 3, 2]^{T} and [1.2]. [1, 2, 1, 3, 2]^{T} corresponds to the instructions included in the target I/O sequence, and [1.2] corresponds to the size of the target data.

Optionally, the computing device may determine the second vector based on a second vector generation model, the at least one feature of the target I/O sequence, and the at least one feature of the target data. The second vector generation model may include any one or more of the fifth mapping relationship to the eighth mapping relationship. Alternatively, the second vector generation model may include a mapping relationship that is more complex than any one of the fifth mapping relationship to the eighth mapping relationship. The second vector generation model may be a model obtained through training by using machine learning based on a fifth training data set. The fifth training data set may include a feature of an I/O sequence, a feature of data, a vector, and a mapping relationship between the feature of the I/O sequence, the feature of the data, and the vector.

S620: Determine the target fingerprint based on the second vector. An implementation of step S620 is similar to an implementation of step S520. For brevity of description, details are not described herein again.

In this embodiment of this application, considering that a feature of a ransomware attack I/O sequence has a special characteristic compared with a feature of a normal I/O sequence, and a feature of data corresponding to the ransomware attack I/O sequence also has a special characteristic compared with a feature of data corresponding to the normal I/O sequence, the computing device may determine the second vector based on the feature of the target I/O sequence and the feature of the target data, to determine the target fingerprint. The target fingerprint may be used to be compared with an attack fingerprint in an attack fingerprint library, to detect a ransomware attack.

FIG. 7 is a schematic flowchart of a method for determining an attack fingerprint according to an embodiment of this application. The method in FIG. 7 may be performed by a computing device. The computing device may be the first computing device 120 or the second computing device 130 in FIG. 1. Alternatively, the computing device may be the computing device 200 in FIG. 2. The method in FIG. 7 includes the following steps.

S710: Determine a first attack I/O sequence based on a first ransomware attack sample in a ransomware attack sample library.

The computing device may attack a storage device based on the first ransomware attack sample in the ransomware attack sample library, to determine at least one attack I/O sequence. The ransomware attack sample library includes at least one ransomware attack sample, and the first ransomware attack sample is a ransomware attack sample in the ransomware attack sample library. Each of the at least one ransomware attack sample may be a known ransomware attack virus. The first attack I/O sequence is one of the at least one attack I/O sequence. The storage device stores data, and the storage device is connected to the computing device.

When attacking the storage device based on the first ransomware attack sample, the computing device may send at least one attack I/O sequence to the storage device. For example, when the first computing device 120 in FIG. 1 attacks the storage device 110 based on the first ransomware attack sample, the first computing device 120 may send at least one attack I/O sequence to the storage device 110. The at least one attack I/O sequence is used to access data in the storage device 110. The attack I/O sequence may include at least one instruction, and each instruction is used to access the data in the storage device 110. The at least one instruction may be, for example, a read instruction, a write instruction, a delete instruction, or a rename instruction.

S720: Determine a first attack fingerprint based on the first attack I/O sequence.

After determining the at least one attack I/O sequence, the computing device may determine one attack fingerprint based on each attack I/O sequence. That is, the computing device may determine the first attack fingerprint based on the first attack I/O sequence. A manner of determining the first attack fingerprint based on the first attack I/O sequence is similar to a manner of determining a target fingerprint based on a target I/O sequence, that is, an implementation of step S720 is similar to that of step S310. For brevity of description, details are not described herein again.

Optionally, the computing device may directly determine, based on the first attack I/O sequence, an instruction included in the first attack I/O sequence and/or a storage address corresponding to the first attack I/O sequence, that is, determine a feature of the first attack I/O sequence. The computing device may determine the first attack fingerprint based on the feature of the first attack I/O sequence. A specific implementation is similar to step S421. Details are not described herein again.

Optionally, the computing device may determine attacked data based on the storage address corresponding to the first attack I/O sequence. Data at the storage address corresponding to the first attack I/O sequence is the attacked data. The computing device may further determine a feature of the attacked data, and determine the first attack fingerprint based on the feature of the first attack I/O sequence and the feature of the attacked data. A specific implementation is similar to step S422. Details are not described herein again.

Optionally, after determining the first attack fingerprint, the computing device may perform step S730.

S730: Establish an attack fingerprint library based on the first attack fingerprint.

The computing device may store the first attack fingerprint, to establish the attack fingerprint library. The attack fingerprint library may store at least one attack fingerprint. The computing device establishes the attack fingerprint library by performing a simulated attack by using a known ransomware attack sample, so that when facing a known ransomware attack, the computing device can more accurately and quickly determine whether the target I/O sequence is normal, thereby shortening detection time and improving detection accuracy.

Optionally, the computing device may further store a storage address corresponding to each attack fingerprint in the attack fingerprint library. The storage address corresponding to each attack fingerprint is a storage address corresponding to an attack I/O sequence for determining the attack fingerprint, and the storage address corresponding to each attack fingerprint is used to recover content of attacked data. The storage address may be a physical address or a logical address. This is not limited in this embodiment of this application.

A specific storage manner of the attack fingerprint library is not limited in this embodiment of this application. For example, the computing device may store the attack fingerprint library in a form of an array, a matrix, a table, or the like. Alternatively, the computing device may store the attack fingerprint library in a form of a key-value pair (key value). A key (key) in the key-value pair corresponds to the attack fingerprint, and a value (value) in the key-value pair corresponds to the storage address corresponding to the attack fingerprint. For example, the attack fingerprint library may perform storage in a form of Table 3.

**Table 3 Attack fingerprint library**

| Key | Value |
|---|---|
| Attack fingerprint 1 | Storage address 1 |
| Attack fingerprint 2 | Storage address 2 |

As shown in Table 3, a storage address corresponding to the attack fingerprint 1 is the storage address 1, and a storage address corresponding to the attack fingerprint 2 is the storage address 3. In addition, the attack fingerprint 1 and the storage address 1 are one key-value pair, and the attack fingerprint 2 and the storage address 2 are one key-value pair.

Optionally, when detecting that the target I/O sequence is a ransomware attack I/O sequence, the computing device may further add the target fingerprint to the attack fingerprint library, to expand the attack fingerprint library.

The computing device may perform a simulated attack by using the ransomware attack sample in the ransomware attack sample library, to determine at least one attack I/O sequence in an attack process of each ransomware attack sample, and determine an attack fingerprint based on the attack I/O sequence, so that an attack fingerprint library used for comparison with the target fingerprint can be constructed. The computing device may further determine a target fingerprint corresponding to an I/O sequence in real time, and compare the target fingerprint with the attack fingerprint in the attack fingerprint library, so that whether the I/O sequence is a ransomware attack I/O sequence can be determined quickly, and content of data corresponding to the I/O sequence does not need to be calculated and detected, thereby improving a ransomware attack detection speed.

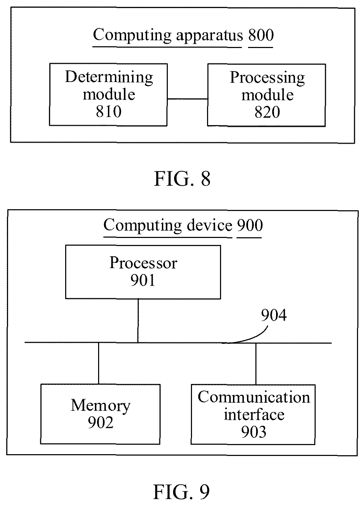

FIG. 8 is a block diagram of a structure of a computing apparatus according to an embodiment of this application. The computing apparatus 800 in FIG. 8 includes a determining module 810 and a processing module 820.

The determining module 810 may be configured to determine a target fingerprint based on a target I/O sequence. The determining module 810 may perform step S310 in the method in FIG. 3, step S410, step S421, and step S422 in the method in FIG. 4, the method in FIG. 5, and the method in FIG. 6.

In some embodiments, the determining module 810 may be further configured to determine an attack fingerprint library, and perform step S710 to step S730 in FIG. 7.

The processing module 820 may determine a similarity between an attack fingerprint in the attack fingerprint library and the target fingerprint based on the attack fingerprint library and the target fingerprint. The processing module 820 may further determine, based on the similarity between the target fingerprint and the attack fingerprint, that the target I/O sequence is a normal I/O sequence or a ransomware attack I/O sequence. The processing module 820 may perform step S320 and step S330 in FIG. 3 and step S430 to step S460 in FIG. 4.

FIG. 9 is a block diagram of a structure of a computing device according to an embodiment of this application. The computing device 900 in FIG. 9 includes a processor 901, a memory 902, and a communication interface 903. The processor 901, the memory 902, and the communication interface 903 communicate with each other through a bus 904.

In some embodiments, the computing device 900 may further include a receiver and/or a transmitter. The receiver is configured to receive information or data from another device, and the transmitter is configured to send information or data stored in the memory 902 to the another device. The another device is a device connected to the computing device 900.

The methods disclosed in the foregoing embodiments of the present invention may be applied to the processor 901, or implemented by the processor 901. The processor 901 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like. In an implementation process, the steps in the foregoing methods may be completed by using an integrated logic circuit of hardware in the processor 901 or instructions in a form of software. The processor 901 may implement or perform the methods, steps, and logical block diagrams disclosed in embodiments of the present invention. The general-purpose processor may be a microprocessor, or the processor may be any conventional processor or the like. The steps of the methods disclosed with reference to embodiments of the present invention may be directly performed and completed by a hardware decoding processor, or may be performed and completed by using a combination of hardware in the decoding processor and a software module. The software module may be located in the memory 902. The processor 901 reads instructions in the memory 902, and completes the steps of the foregoing methods in combination with hardware of the processor 901.

The memory 902 may store instructions for performing the methods performed by the computing device in the foregoing embodiments. The memory 902 may be a volatile memory or a non-volatile memory, or may include both a volatile memory and a non-volatile memory. The non-volatile memory may be a ROM, a PROM, an EPROM, an EEPROM, or a flash memory. The volatile memory may be a RAM, and is used as an external cache. By way of example but not limitation description, RAMs of many forms are available, for example, an SRAM, a DRAM, an SDRAM, a DDR SDRAM, an ESDRAM, an SLDRAM, and a DRDRAM. It should be noted that the memory of the systems and methods described in this specification includes but is not limited to these and any memory of another proper type. The processor 901 may execute the instructions stored in the memory 902 and complete the steps of the computing device in the foregoing embodiments in combination with other hardware. For a detailed working process and beneficial effects, refer to the descriptions in the foregoing embodiments.

In addition to a data bus, the bus 904 may further include a power bus, a control bus, a status signal bus, and the like. However, for clear description, various types of buses are marked as the bus 904 in the figure.

An embodiment of this application further provides a computer storage medium. The computer storage medium stores program instructions. When a program is executed, some or all of the steps of the methods in the embodiments corresponding to FIG. 3 to FIG. 7 may be included.

An embodiment of this application further provides a chip system. The chip system includes a logic circuit. The logic circuit is configured to: be coupled to an input/output interface, and perform data transmission through the input/output interface, to perform the steps included in FIG. 3 to FIG. 7 in the foregoing embodiments.

According to the method provided in embodiments of this application, this application further provides a computer program product. The computer program product includes computer program code. When the computer program code is run on a computer, the computer is caused to perform the steps in the foregoing embodiments.

According to the method provided in embodiments of this application, this application further provides a computer-readable medium. The computer-readable medium stores program code. When the program code is run on a computer, the computer is caused to perform the steps in the foregoing embodiments.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, to be specific, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A ransomware attack detection method, comprising:
determining a target fingerprint based on a target input/output I/O sequence, wherein the target I/O sequence is used to access target data;
determining a similarity between an attack fingerprint in an attack fingerprint library and the target fingerprint based on the attack fingerprint library and the target fingerprint, wherein the attack fingerprint library comprises at least one attack fingerprint, and the attack fingerprint is determined based on an attack I/O sequence in a historical ransomware attack; and
determining, based on the similarity, that the target I/O sequence is a normal I/O sequence or a ransomware attack I/O sequence.

2. The method according to claim 1, wherein the determining the target fingerprint based on the target input/output I/O sequence comprises:
determining the target fingerprint based on a feature of the target I/O sequence, wherein the feature of the target I/O sequence comprises an instruction comprised in the target I/O sequence and/or a storage address corresponding to the target I/O sequence, the target I/O sequence comprises at least one instruction, and the at least one instruction is used to access the target data.

3. The method according to claim 1 or 2, wherein the determining the target fingerprint based on the target input/output I/O sequence comprises:
determining the target fingerprint based on the feature of the target I/O sequence and a feature of the target data, wherein
when the target data belongs to a file system, the feature of the target data comprises at least one of the following: metadata of the target data, metadata of the file system, and content of the target data; or
when the target data is a data block or a part of data in the data block, the feature of the target data comprises metadata of the target data and/or content of the target data.

4. The method according to claim 3, wherein the metadata of the file system comprises at least one of the following: identification information of the target data in the file system and identification information of a directory in which the target data is located in the file system.

5. The method according to claim 3 or 4, wherein the determining the target fingerprint based on the feature of the target I/O sequence and the feature of the target data comprises:
determining an entropy value of the content of the target data based on the content of the target data; and
determining the target fingerprint based on the feature of the target I/O sequence and the entropy value of the content of the target data.

6. The method according to any one of claims 1 to 5, wherein the determining the target fingerprint based on the target input/output I/O sequence comprises:
encoding at least one feature of the target I/O sequence, to determine the target fingerprint.

7. The method according to claim 6, wherein the encoding the at least one feature of the target I/O sequence, to determine the target fingerprint comprises:
determining a first vector based on the at least one feature of the target I/O sequence; and
determining the target fingerprint based on the first vector.

8. The method according to any one of claims 3 to 5, wherein the determining the target fingerprint based on the feature of the target I/O sequence and the feature of the target data comprises:
encoding at least one feature of the target I/O sequence and at least one feature of the target data, to determine the target fingerprint.

9. The method according to claim 8, wherein the encoding the at least one feature of the target I/O sequence and the at least one feature of the target data, to determine the target fingerprint comprises:
determining a second vector based on the at least one feature of the target I/O sequence and the at least one feature of the target data; and
determining the target fingerprint based on the second vector.

10. The method according to any one of claims 1 to 9, wherein the determining, based on the similarity, that the target I/O sequence is the normal I/O sequence or the ransomware attack I/O sequence comprises:
if a similarity between the target fingerprint and a first attack fingerprint is greater than or equal to a first preset threshold, determining that the target I/O sequence is the ransomware attack I/O sequence, wherein the first attack fingerprint is one of the at least one attack fingerprint; and
if a similarity between the target fingerprint and each of the at least one attack fingerprint is less than the first preset threshold, determining that the target I/O sequence is the normal I/O sequence.

11. The method according to any one of claims 1 to 10, wherein the attack fingerprint library further comprises a storage address corresponding to each attack fingerprint.

12. The method according to claim 11, wherein the attack fingerprint library performs storage in a form of a key-value pair, a key in the key-value pair corresponds to the attack fingerprint, and a value in the key-value pair corresponds to the storage address corresponding to the attack fingerprint.

13. The method according to any one of claims 1 to 12, wherein the method further comprises:
when determining that the target I/O sequence is the ransomware attack I/O sequence, adding the target fingerprint to the attack fingerprint library.

14. The method according to claim 13, wherein before adding the target fingerprint to the attack fingerprint library, the method further comprises:
determining that a similarity between a second attack fingerprint and the target fingerprint is less than a second preset threshold, wherein the second attack fingerprint is an attack fingerprint that is in the at least one attack fingerprint and that has a highest similarity to the target fingerprint, and the second preset threshold is greater than the first preset threshold.

15. The method according to any one of claims 1 to 14, wherein the method further comprises:
determining a first attack I/O sequence based on a first ransomware attack sample in a ransomware attack sample library, wherein the first ransomware attack sample is a ransomware attack sample in the ransomware attack sample library; and
determining a first attack fingerprint based on the first attack I/O sequence, wherein the first attack fingerprint is one of the at least one attack fingerprint.

16. The method according to any one of claims 1 to 15, wherein the target fingerprint and/or the attack fingerprint are/is a character string of a preset length.

17. A computing apparatus, comprising:
a determining module, configured to determine a target fingerprint based on a target input/output I/O sequence, wherein the target I/O sequence is used to access target data; and
a processing module, configured to determine a similarity between an attack fingerprint in an attack fingerprint library and the target fingerprint based on the attack fingerprint library and the target fingerprint, wherein the attack fingerprint library comprises at least one attack fingerprint, and the attack fingerprint is determined based on an attack I/O sequence in a historical ransomware attack, wherein
the processing module is further configured to determine, based on the similarity, that the target I/O sequence is a normal I/O sequence or a ransomware attack I/O sequence.

18. The apparatus according to claim 17, wherein the determining module is specifically configured to:
determine the target fingerprint based on a feature of the target I/O sequence, wherein the feature of the target I/O sequence comprises an instruction comprised in the target I/O sequence and/or a storage address corresponding to the target I/O sequence, the target I/O sequence comprises at least one instruction, and the at least one instruction is used to access the target data.

19. The apparatus according to claim 17 or 18, wherein the determining module is specifically configured to:
determine the target fingerprint based on the feature of the target I/O sequence and a feature of the target data, wherein
when the target data belongs to a file system, the feature of the target data comprises at least one of the following: metadata of the target data, metadata of the file system, and content of the target data; or
when the target data is a data block or a part of data in the data block, the feature of the target data comprises metadata of the target data and/or content of the target data.

20. The apparatus according to claim 19, wherein the metadata of the file system comprises at least one of the following: identification information of the target data in the file system and identification information of a directory in which the target data is located in the file system.

21. The apparatus according to claim 19 or 20, wherein the determining module is specifically configured to:
determine an entropy value of the content of the target data based on the content of the target data; and
determine the target fingerprint based on the feature of the target I/O sequence and the entropy value of the content of the target data.

22. The apparatus according to any one of claims 17 to 21, wherein the determining module is specifically configured to encode at least one feature of the target I/O sequence, to determine the target fingerprint.

23. The apparatus according to claim 22, wherein the determining module is specifically configured to:
determine a first vector based on the at least one feature of the target I/O sequence; and
determine the target fingerprint based on the first vector.

24. The apparatus according to any one of claims 19 to 21, wherein the determining module is specifically configured to encode at least one feature of the target I/O sequence and at least one feature of the target data, to determine the target fingerprint.

25. The apparatus according to claim 24, wherein the determining module is specifically configured to:
determine a second vector based on the at least one feature of the target I/O sequence and the at least one feature of the target data; and
determine the target fingerprint based on the second vector.

26. The apparatus according to any one of claims 17 to 25, wherein the processing module is specifically configured to:
if a similarity between the target fingerprint and a first attack fingerprint is greater than or equal to a first preset threshold, determine that the target I/O sequence is the ransomware attack I/O sequence, wherein the first attack fingerprint is one of the at least one attack fingerprint; and
if a similarity between the target fingerprint and each of the at least one attack fingerprint is less than the first preset threshold, determine that the target I/O sequence is the normal I/O sequence.

27. The apparatus according to any one of claims 17 to 26, wherein the attack fingerprint library further comprises a storage address corresponding to each attack fingerprint.

28. The apparatus according to claim 27, wherein the attack fingerprint library performs storage in a form of a key-value pair, a key in the key-value pair corresponds to the attack fingerprint, and a value in the key-value pair corresponds to the storage address corresponding to the attack fingerprint.

29. The apparatus according to any one of claims 17 to 28, wherein the processing module is configured to: when determining that the target I/O sequence is the ransomware attack I/O sequence, add the target fingerprint to the attack fingerprint library.

30. The apparatus according to claim 29, wherein before adding the target fingerprint to the attack fingerprint library, the processing module is further configured to determine that a similarity between a second attack fingerprint and the target fingerprint is less than a second preset threshold, wherein the second attack fingerprint is an attack fingerprint that is in the at least one attack fingerprint and that has a highest similarity to the target fingerprint, and the second preset threshold is greater than the first preset threshold.

31. The apparatus according to any one of claims 17 to 30, wherein the determining module is further configured to:
determine a first attack I/O sequence based on a first ransomware attack sample in a ransomware attack sample library, wherein the first ransomware attack sample is a ransomware attack sample in the ransomware attack sample library; and
determine a first attack fingerprint based on the first attack I/O sequence, wherein the first attack fingerprint is one of the at least one attack fingerprint.

32. The apparatus according to any one of claims 17 to 31, wherein the target fingerprint and/or the attack fingerprint are/is a character string of a preset length.

33. A computing device, comprising a processor, wherein the processor is configured to: be coupled to a memory, and read and execute instructions and/or program code in the memory, to perform the method according to any one of claims 1 to 16.

34. A chip system, comprising a logic circuit, wherein the logic circuit is configured to: be coupled to an input/output interface, and perform data transmission through the input/output interface, to perform the method according to any one of claims 1 to 16.

35. A computer-readable storage medium, wherein the computer-readable storage medium stores program code, and when the program code is run on a computer, the computer is caused to perform the method according to any one of claims 1 to 16.
